# EUROPEAN PATENT APPLICATION

(11) **EP 4 769 781 A1**
(43) Date of publication of application: **01.07.2026**
(21) Application number: 25861183.9
(22) Date of filing: 29.07.2025
(51) Int. Cl.: H01M 50/383, H01M 50/367, H01M 50/317, H01M 50/342, H01M 50/291, H01M 50/249

(54) **BATTERY PACK AND VEHICLE INCLUDING SAME**

(30) Priority: 26.08.2024 KR 20240114408
(71) Applicant: LG Energy Solution, Ltd., Seoul 07335 (KR)
(72) Inventor: LEE, Joo-Hyoung, Daejeon 34122 (KR); HAN, Sung-Min, Daejeon 34122 (KR)
(74) Representative: BCKIP Part mbB
(86) International application number: PCT/KR2025/011267
(87) International publication number: WO 2026/049318

(57) **Abstract**

The present disclosure relates to a battery module including: a plurality of battery cells; a pack case configured to accommodate the plurality of battery cells; and a barrier member coupled to the pack case and configured to extend in at least one direction.

## Description

### TECHNICAL FIELD

The present disclosure relates to a battery pack and a vehicle including the same.

This application is based on and claims priority from Korean Patent Application No. 10-2024-0114408, filed on August 26, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack. Accordingly, the number of battery cells included in the battery module or pack may be variously configured depending on the required output voltage or charge/discharge capacity

A common method for configuring a battery pack by connecting multiple battery cells in series/parallel is performed by preferentially configuring a battery module including at least one battery cell and then by adding other components to at least one battery module to configure a battery pack or battery rack. Recently, cell-to-pack-type battery packs in which multiple battery cells are directly stored in a pack housing or the like, instead of being modularized, have been manufactured.

Meanwhile, since battery cells undergo chemical reactions during charging and discharging, their performance may deteriorate if they are used at a temperature higher than an appropriate temperature, and if the heat is not controlled to the appropriate temperature, unexpected ignition or explosion is more likely to occur. In addition, battery modules are structured to store these battery cells densely within the module case. Therefore, if a thermal event occurs in a battery cell, high-temperature gases or flames emitted from the battery cell may spread to adjacent battery cells, causing a chain reaction of explosions and posing a serious safety hazard.

Conventionally, high-temperature gases and flames are vented through venting holes provided at the top of the module case and then released to the outside through the space between the pack case and the battery module. However, this may cause a problem in which the high-temperature gases and flames released through the venting holes may move to other battery cells, thereby accelerating thermal runaway between the battery cells.

In addition, the shape of the module case may be deformed by the heat from the high-temperature gases and flames, so that the gap between the pack case and the battery module may vary, which makes it difficult to secure a path for the high-temperature gases and flames to escape from the pack case.

Therefore, there is a need to develop a structure capable of effectively preventing or delaying thermal runaway by suppressing the movement of venting gases and flames to other battery cells.

In addition, it is necessary to develop a structure capable of maintaining the gap between the pack case and the battery module when thermal runaway occurs in the battery cell, thereby ensuring a path for discharging the high-temperature gases and flames generated within the battery module.

### DISCLOSURE

### Technical Problem

The present disclosure is designed to solve the problems of the related art, and therefore the present disclosure is directed to providing a battery pack capable of effectively preventing or delaying thermal runaway by suppressing venting gases or flames from moving to other battery cells, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery cells; a pack case configured to accommodate the plurality of battery cells; and a barrier member coupled to the pack case and configured to extend in at least one direction.

The battery pack may further including a module case configured to accommodate the plurality of battery cells in a group, and the barrier member may be configured to maintain a gap between the pack case and the module case.

The module case may have a plurality of venting holes formed on one side thereof and configured to discharge venting gas generated from the battery cell to the outside, and the barrier member may be positioned between adjacent venting holes.

The battery pack may further include a module cover configured to at least partially cover one side of the module case.

The barrier member may be configured to extend in a stacking direction of the battery cells.

A plurality of barrier members may be arranged to be spaced apart from each other in a longitudinal direction of the battery cell.

The pack case may include a venting device configured to discharge venting gas generated from the battery cell to the outside, and the barrier member may be configured to guide the venting gas toward the venting device.

The pack case may include a cross-beam interposed between the plurality of battery cells, and the barrier member may be configured to be coupled to the cross-beam.

A plurality of cross-beams may be arranged in the stacking direction of the plurality of battery cells, and the barrier member may be configured to cross at least some of the plurality of cross-beams.

The barrier member may have a coupling groove configured such that an end of the cross-beam is inserted thereinto.

The cross-beam may include a support configured to prevent the barrier member from moving in a left-right direction.

The pack case may include a protrusion protruding inwardly from an inner surface thereof to restrict movement of the barrier member.

In addition, according to another aspect of the present disclosure, there is provided a vehicle including a battery pack according to an embodiment of the present disclosure.

### Advantageous Effects

According to one aspect of the present disclosure, since the venting paths are separated from each other by the barrier members, venting gas or flames can be prevented from moving over the barrier member to other battery cells. That is, according to this aspect of the present disclosure, it becomes possible to effectively prevent or delay gas or flames from propagating to other battery cells and causing thermal runaway. Therefore, the safety and reliability of the battery pack can be ensured.

In addition, according to another aspect of the present disclosure, since the barrier member may maintain a constant gap between the battery cells and the pack case in the event of an abnormality of the battery module, a path for discharging high-temperature gases or flames generated within the battery cell can be secured.

That is, according to the aspect of the present disclosure, even if a thermal event occurs in some battery cells within the battery module, gases or flames may smoothly move outside the battery module.

In addition, according to another aspect of the present disclosure, since the barrier member is coupled to the cross-beam, the position of the barrier member may be stably maintained even if the module case is thermally damaged. Accordingly, it becomes possible to stably ensure functions of the barrier member to separate the venting paths from each other and maintain the gap between the battery module and the pack case.

In addition, according to another aspect of the present disclosure, it becomes possible to prevent or delay events due to thermal runaway, such as fire or explosion, in a battery pack including multiple battery modules or a device equipped with them.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery pack according to an embodiment of the present disclosure.
FIG. 2 is an exploded perspective view of a battery pack according to an embodiment of the present disclosure.
FIG. 3 is a perspective view illustrating the interior of a battery pack according to an embodiment of the present disclosure.
FIG. 4 is an exploded perspective view of a battery module included in a battery pack according to an embodiment of the present disclosure.
FIG. 5 is a cross-sectional view of a battery pack to which a barrier member is applied according to an embodiment of the present disclosure, which may be a cross-sectional view taken along line I - I' in FIG. 1.
FIG. 6 is a cross-sectional view of a battery pack when a thermal event occurs in the battery pack according to an embodiment of the present disclosure.
FIG. 7 is a drawing illustrating the movement direction of venting gas when a thermal event occurs in a battery pack according to an embodiment of the present disclosure.
FIG. 8 is a drawing illustrating the coupling structure of a barrier member and a cross-beam in a battery pack according to an embodiment of the present disclosure.
FIG. 9 is a drawing in which a barrier member is separated in a battery pack according to an embodiment of the present disclosure.
FIG. 10 is a cross-sectional view of a battery pack according to an embodiment of the present disclosure, which may be a cross-sectional view taken along line II - II' in FIG. 1.
FIG. 11 is a drawing illustrating a coupling structure between a barrier member and a cross-beam in a battery pack according to another embodiment of the present disclosure.
FIG. 12 is a cross-sectional view of a battery pack according to another embodiment of the present disclosure, which may be a cross-sectional view taken along line III - III' in FIG. 1.
FIG. 13 is a cross-sectional view of a battery pack according to another embodiment of the present disclosure, which may be a cross-sectional view taken along line III - III' in FIG. 1.
FIG. 14 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up(ward), down(ward), left, right, front(ward), and back(ward) are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

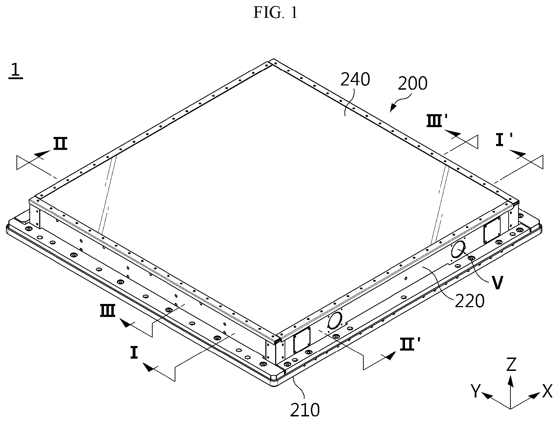

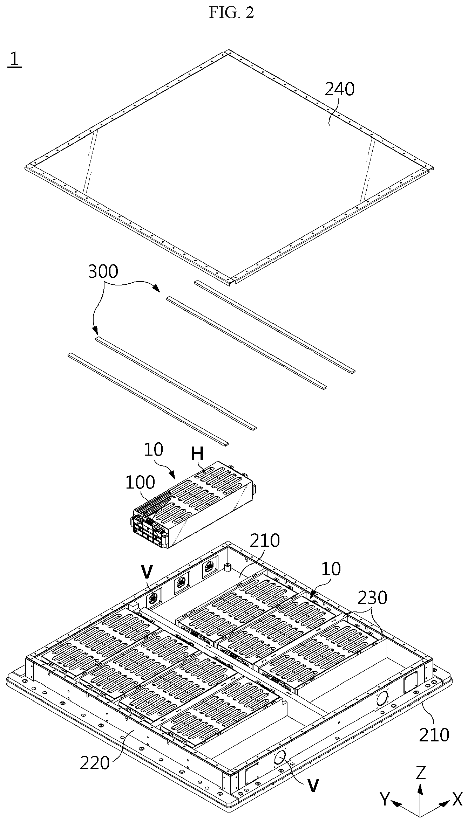

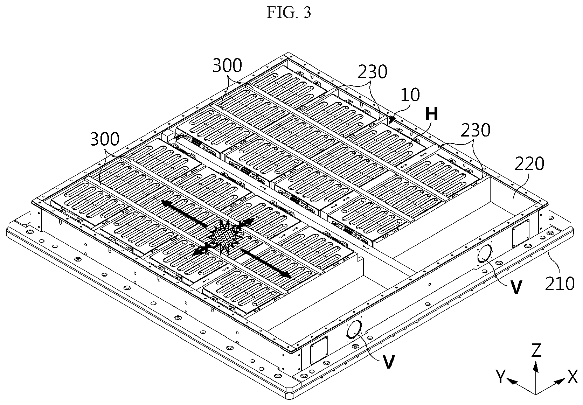

FIG. 1 is an overall perspective view of a battery pack according to an embodiment of the present disclosure, FIG. 2 is an exploded perspective view of a battery pack according to an embodiment of the present disclosure, and FIG. 3 is a perspective view illustrating the interior of a battery pack according to an embodiment of the present disclosure.

Referring to FIGS. 1 to 3, a battery pack 1 according to an embodiment of the present disclosure includes a battery cell 100, a pack case 200, and a barrier member 300.

First, referring to FIG. 2, a plurality of battery cells 100 may be provided. In addition, although not shown in the drawing, the plurality of battery cells 100 may include an electrode assembly, a cell case that stores the electrode assembly, and an electrode lead that is connected to the electrode assembly and extends outside the cell case, thereby functioning as an electrode terminal. In this case, the plurality of battery cells 100 may be electrically connected to each other.

The battery cell 100 may be a pouch-type secondary battery. A cell case of the pouch-type secondary battery may be configured as a pouch in which a metal layer made of aluminum is interposed between polymer layers.

As illustrated in FIG. 2, the plurality of battery cells 100 may be disposed side by side in a front-back direction (Y-axis direction) while standing in a vertical direction (Z-axis direction). In this case, each battery cell 100 may have sealing portions facing the left-right direction (X-axis direction) and the upward direction (+Z-axis direction), and the receiving portion facing the front-back direction (Y-axis direction).

The present disclosure is not limited to a specific type or shape of the battery cell 100, and various battery cells 100 known at the time of filing the present disclosure may be applied to configure the battery pack 1 of the present disclosure. In the present embodiment, although a pouch-type secondary battery with high energy density and easy stacking will be described as shown in the drawing, it is obvious that a cylindrical or prismatic secondary battery may also be applied to the battery cell 100.

The pack case 200 may be configured to accommodate a plurality of battery cells 100. That is, the pack case 200 may provide an accommodation space for accommodating plurality of battery cells 10. The pack case 200 may be made of a material capable of securing mechanical strength, such as metal, such as steel or SUS, or plastic, or may include such a material in order to safely protect the battery cells 100 stored therein.

The barrier member 300 may be provided outside the battery cell 100. The barrier member 300 may be provided in the space between the pack case 200 and the battery cells 100. For example, as disclosed in the embodiment illustrated in FIG. 3, the barrier member 300 may be provided on the upper side of the battery cell 100.

The barrier member 300 may be configured to extend in at least one direction. For example, as disclosed in the embodiment illustrated in FIG. 3, the barrier member 300 may be configured to extend along a stacking direction (the Y-axis direction in FIG. 3) of a plurality of battery modules 10. That is, the barrier member 300 may be configured to extend along the front-back direction of the pack case 200.

The barrier member 300 may be configured to partition the space between the battery cells 100 and the pack case 200. In particular, the barrier member 300 may be configured to extend from one end of a stack of the battery cells 100 to the other end. That is, the barrier member 300 may be configured to overlap at least a portion of the plurality of battery cells 100 arranged in the front-back direction.

According to the above-implemented configuration of the present disclosure, the presence of the barrier member 300 may enable the battery cells 100 to be partitioned and separated in the outer space of the battery cells 100. That is, the venting paths of the battery cells 100 may be separated by the barrier member 300.

Specifically, if a thermal event occurs in a battery cell 100, venting gases or flames may flow into the space between the battery cells 100 and the pack case 200, and the venting gases or flames are likely to propagate to adjacent battery cells 100 in the space between the battery cells 100 and the pack case 200. However, according to the above-implemented configuration of the present disclosure, when a thermal event occurs in a battery cell 100, the propagation of high-temperature venting gases or flames to adjacent battery cells 100 may be suppressed in the space between the battery cells 100 and the pack case 200 (see the bold arrows in FIG. 3).

Therefore, according to the above-implemented configuration of the present disclosure, the propagation of thermal runaway between the battery cells 100 may be effectively prevented or delayed. Therefore, the safety and reliability of the battery pack 1 may be ensured.

In addition, the barrier member 300 may be configured to be coupled to the pack case 200. The barrier member 300 may be detached due to gravity, impacts, heat, or the like within the space between the battery cells 100 and the pack case 200. However, according to the above-implemented configuration of the present disclosure, since the barrier member 300 is coupled to the pack case 200, the position of the barrier member 300 may be stably maintained. Therefore, the structural stability of the battery pack 1 may be secured, and the function of the barrier member 300 to separate the venting paths of the battery cells 100 may be reliably ensured.

Referring to FIG. 2, the pack case 200 according to an embodiment of the present disclosure may include a base frame 210 and a side frame 220.

The base frame 210 may form the bottom surface of the pack case 200 and may be configured in the form of a square plate. In addition, the base frame 210 may be configured so that a plurality of battery modules 10 are seated thereon. Furthermore, the base frame 210 may have a flat upper surface so that the plurality of battery cells 100 are stably seated thereon.

The side frame 220 may extend upward from respective edges of the base frame 210. The side frame 220 may have a plurality of unit walls to surround the plurality of battery cells 100. More specifically, the side frame 220 may include a rear wall located at the +Y-direction end of the base frame 210, a right wall located at the -X-direction end, a front wall located at the -Y-direction end, and a left wall located at the +X-direction end, respectively, to form the side surfaces of the pack case 200.

The pack case 200 may include a cross-beam 230. The cross-beam 230 may be interposed between the plurality of battery cells 100. The cross-beam 230 may be provided to partition the plurality of battery cells 100. For example, the cross-beam 230 may be configured in the form of a partition extending in the left-right direction (the X-axis direction in FIG. 2) of the battery pack 1, and may be interposed between the battery cells 100 adjacently disposed in the front-back direction (the Y-axis direction in FIG. 2) of the battery pack 1. The cross-beam 230 may be arranged parallel to the rear and front walls of the side frame 220.

In addition, the pack case 200 may further include a pack lid 240. The pack lid 240 may be configured to cover the top of the plurality of battery cells 100. The pack lid 240 may be coupled to the upper portion of the side frame 220, thereby forming the upper surface of the pack case 200.

The pack lid 240 may protect components accommodated therein, such as the battery cells 100, and prevent venting gases and/or sparks emitted from the battery cells 100 from moving to the outside of the pack case 200, particularly to the upper portion.

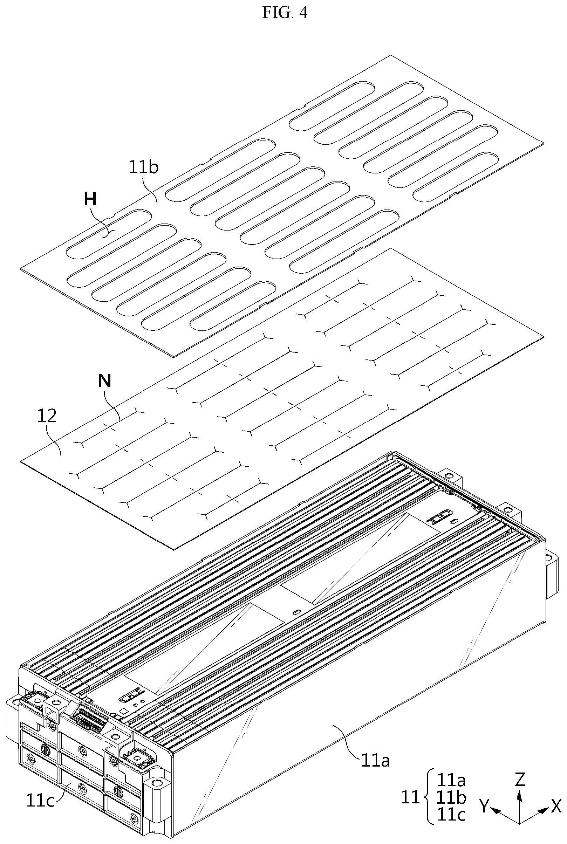

FIG. 4 is an exploded perspective view of a battery module included in a battery pack according to an embodiment of the present disclosure.

Referring to FIG. 4, a plurality of battery cells 100 may be modularized into one or more battery modules 10. That is, the battery pack 1 according to the present disclosure may include one or more battery modules 10. In addition, a plurality of battery cells 100 may be included as components of one or more battery modules 10. In this case, the plurality of battery cells 100 included in the battery module 10 may be electrically connected to each other.

Moreover, a plurality of battery modules 10 may be provided in the pack case 200. That is, the battery pack 1 according to the present disclosure may include a plurality of battery modules 10, and the plurality of battery cells 100 included in the battery pack 1 may be divided and included within the plurality of battery modules 10.

The plurality of battery modules 10 may be arranged along at least one direction within the pack case 200. For example, as disclosed in the embodiment illustrated in FIG. 2, a total of eight battery modules 10 may be arranged in four rows in the front-back direction of the pack case 200 and in two columns in the left-right direction of the pack case 200.

In particular, the battery pack 1 according to the present disclosure may include a module case 11. The module case 11 may have an empty space formed therein and accommodate at least some of the plurality of battery cells 100 in the inner space. In particular, the module case 11 may be included in each battery module 10, grouping the plurality of battery cells 100 into a plurality of battery modules 10, and may serve as a boundary that physically confines the inner space of each battery module 10.

In addition, although not shown in the drawing, the battery module 10 may include a busbar assembly and/or module terminal electrically connected to the plurality of battery cells 100 accommodated therein.

The module case 11 may include a case body 11a and a top plate 11b. The case body 11a may be configured to accommodate the battery cells 100 therein. This case body 11a may be made of rigid and heat-resistant metal to physically and chemically protect the accommodated battery cells 100.

In this case, the upper, front, and rear surfaces of the case body 11a may be open. For example, the case body 11a may be configured as a U-frame. In the case where the case body 11a is configured as a U-frame, it may be configured to cover both lateral surfaces and the lower surface of the plurality of battery cells 100. The case body 11a may include left and right plates covering both lateral surfaces of the plurality of battery cells 100, and a lower plate covering the lower surface of the plurality of battery cells 100. In addition, the left plate, right plate, and lower plate may be configured in an integrated form.

The top plate 11b may be provided to form the upper surface of the module case 11. In the case where the case body 11a is configured as a U-frame, the top plate 11b may be coupled to cover the upper opening of the case body 11a. The top plate 11b may be welded to the case body 11a. In this case, the top plate 11b and the case body 11a may be coupled to each other into a square tube with front and rear openings.

In addition, the module case 11 may include end plates 11c provided on the front and rear openings of the case body 11a. The end plate 11c may be welded to the case body 11a. Although not shown in the drawings for convenience, the end plate 11c may be configured such that, for example, an inner surface is made of an insulating material and an outer surface is made of a metal material. In addition, the end plate 11c may be partially provided with holes or slits for exposing components that are required to be exposed to the outside, such as a positive electrode terminal and negative electrode terminal or a connector of the battery module 10.

In addition, the module case 11 may be formed in various other shapes. For example, the module case 11 may include a box-shaped lower case having an upper opening, and an upper cover provided to cover the upper opening of the lower case. Alternatively, the module case 11 may be configured as a mono-frame. For example, the case body 11a may be configured as a rectangular tube having an upper surface, a lower surface, a left surface, a right surface, and front and rear openings.

In addition, a venting hole H may be formed in the module case 11. The venting hole H may be configured to allow venting gas generated from the battery cell 100 to be discharged to the outside of the module case 11. The venting hole H may be formed on one side of the module case 11, enabling venting in one direction. For example, the venting hole H may be formed on the upper side of the module case 11.

For example, a venting hole H may be formed in the top plate 11b, and directional venting of the battery module 10 may be performed upward through the venting hole H. A plurality of venting holes H may be provided at regular intervals in the horizontal direction (X-axis and Y-axis directions).

As described above, the venting hole H provided in the upper side of the module case 11 may be configured to discharge gases or flames generated within the battery module 10 to the outside of the battery module 10 when thermal runaway occurs in the battery module 10. The remaining portion of the module case 11, excluding the venting holes H, may be sealed, and gases or flame may be discharged in a straight line toward the venting hole H.

According to the above-implemented configuration of the present disclosure, regardless of where a thermal event occurs in the battery cell 100, gases or flames generated in the battery cell 100 may be discharged to the outside of the battery module 10 through specific venting holes H provided above the battery cell 100, thereby facilitating venting.

The battery module 10 according to an embodiment of the present disclosure may further include a module cover 12.

Referring to FIG. 4, the module cover 12 may be configured to at least partially cover one side of the module case 11 where the venting holes H are formed. For example, the module cover 12 may be configured to cover the top plate 11b. The module cover 12 may be provided outside and/or inside the module case 11.

In particular, the module cover 12 may be configured to cover the venting hole H. For example, the module cover 12 may be configured in the shape of a sheet, and seated on the upper surface of the battery cell 100. The module cover 12 may be configured to cover all of the plurality of venting holes H.

The module cover 12 may be configured to suppress venting gases or flames emitted when a thermal event occurs within the battery module 10 from spreading to other battery cells 100. To this end, the module cover 12 may be made of a material with excellent heat and/or fire resistance, such as a mica sheet or a silicone composite material.

Accordingly, the module cover 12 may maintain morphological stability without deformation even when high-temperature heat is generated, thereby stably blocking high-temperature gases or flames generated from the battery cell 100.

According to the above-implemented configuration of the present disclosure, since the module cover 12 is made of a rigid and heat-resistant material, deformation due to high-temperature gases or flames may be minimized.

The module cover 12 may be configured to be at least partially open and close in response to venting gas or flames. Specifically, at least a portion of the module cover 12 may be configured to rupture due to the pressure or heat of the venting gas directed toward the venting hole H. Alternatively, at least a portion of the module cover 12 may be configured to be completely detached.

To this end, the module cover 12 may have a notched portion N. The notched portion N may be configured to be opened by venting gas and to discharge the venting gas to the outside of the battery module 10.

A plurality of notched portions N may be provided at regular intervals in the horizontal direction (X-axis and Y-axis directions). In particular, the notched portion N may be formed at a position corresponding to the venting hole H. In addition, the notched portion N may be configured in a shape corresponding to the venting hole H.

According to the above-implemented configuration of the present disclosure, when a thermal event occurs in a specific battery cell 100, the notched portion N provided on one side of the specific battery cell 100 may rupture, thereby opening at least one of the plurality of venting holes H. Accordingly, venting gas or the like may be discharged to the outside of the module case 11 through the open venting hole H.

In addition, the module cover 12 may prevent gases or flames discharged to the outside of the module case 11 from re-entering the battery module 10. That is, the venting hole H provided on the battery cell 100 side, where no thermal event has occurred, may remain closed without being opened. Therefore, venting gas or flames discharged to the outside through the open venting hole H may be fundamentally prevented from re-entering the battery module 10. In addition, the remaining portion of the module cover 12 that has not ruptured may block not only heat but also high-temperature gases, flames, and discharged particles generated from the battery cell 100.

That is, according to the above-implemented configuration of the present disclosure, when thermal runaway occurs in the battery module 10, not only may venting gas or flames generated within the battery module 10 be smoothly discharged to the outside of the battery module 10, but the discharged venting gas or flames may also be prevented from flowing back into the battery module 10. Therefore, it becomes possible to effectively prevent or delay the propagation of thermal runaway by minimizing thermal propagation to neighboring battery cells 100 or battery modules 10.

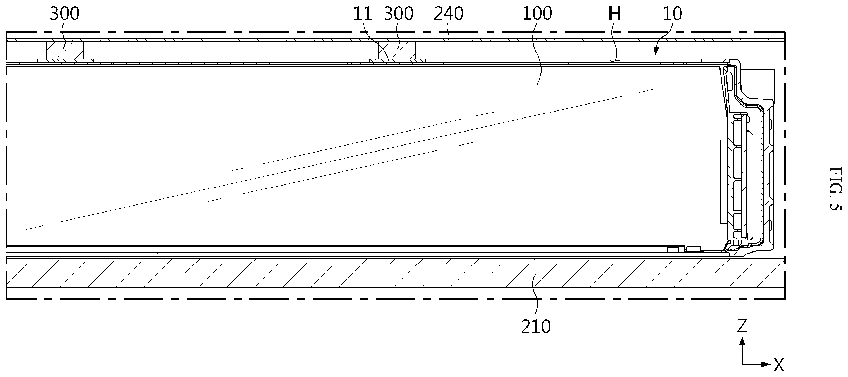

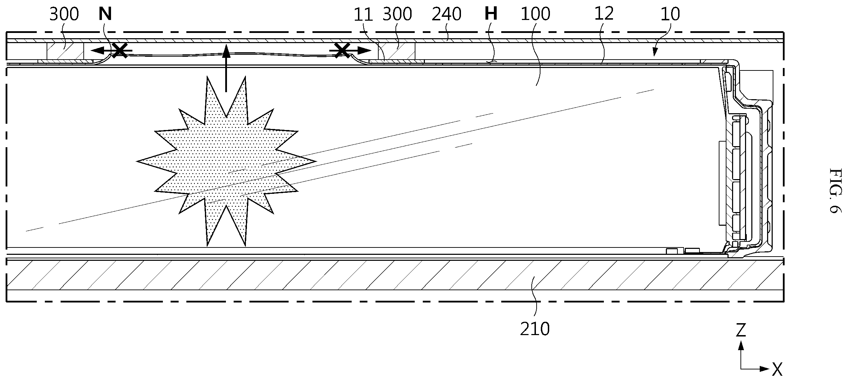

FIG. 5 is a cross-sectional view of a battery pack to which a barrier member is applied according to an embodiment of the present disclosure, which may be a cross-sectional view taken along line I - I' in FIG. 1. In addition, FIG. 6 is a cross-sectional view of a battery pack when a thermal event occurs in the battery pack according to an embodiment of the present disclosure.

Since the pack case 200 and the module case 11 have a predetermined space between them, venting gas or flames may flow through the space. That is, a venting path may be formed in the space among the barrier member 300, the pack case 200, and the module case 11. The barrier member 300 may be provided outside the battery module 10. That is, the barrier member 300 may be provided in the space between the pack case 200 and the module case 11.

As disclosed in the embodiments illustrated in FIGS. 5 and 6, in the case where a venting hole H is formed in the upper side of the module case 11, the barrier member 300 may be provided in the space between the pack lid 240 and the upper side of the module case 11.

According to the above-implemented configuration of the present disclosure, when a thermal event occurs in a battery module 10, high-temperature venting gas or flames may be prevented from moving to adjacent venting paths in the space between the module case 11 and the pack case 200.

Furthermore, the barrier member 300 may be configured to maintain a gap between the pack case 200 and the module case 11. The barrier member 300 may be configured to suppress upward movement of the module case 11.

If the barrier member 300 is not provided, the shape of the module case 11 may be deformed by the pressure of the gas discharged from the battery cell 100 and/or the high heat due to dust or flames when thermal runaway occurs within the battery module 10. For example, a portion of the upper side of the module case 11 may bulge upward, while an adjacent portion may sag downward. As a result, the gap between the module case 11 and the pack case 200 may be reduced in the area where the upper side of the module case 11 bulges upward, thereby failing to secure a path for the venting gas to travel.

However, according to an embodiment of the present disclosure, since the barrier member 300 is provided, the module case 11 may be prevented from being warped or deformed by pressure and/or heat due to venting gas. As a result, according to the above-implemented configuration of the present disclosure, the gap between the module case 11 and the pack case 200 may be maintained. This enables the venting gas or flames to smoothly flow through the venting path, so that thermal runaway of the battery module 10 may be suppressed or prevented. Therefore, the safety and reliability of the battery module 10 may be ensured.

The barrier member 300 may be provided as a rigid body. Here, the term "rigid body" is in contrast to an elastic body. For example, the barrier member 300 may be formed of a material such as metal, such as SUS or aluminum, or a reinforced fiber plastic. As a result, since the mechanical rigidity of the barrier member 300 is increased and elastic deformation is minimal, a constant gap between the module case 11 and the pack case 200 may be maintained even when an external impact is applied.

In addition, the barrier member 300 may be made of a material with fire and/or heat resistance. For example, the barrier member 300 may be made of a material such as flame-retardant plastic or mica. According to the above-implemented configuration of the present disclosure, the barrier member 300 may be prevented from melting or disappearing due to high heat of a flame. However, the material of the barrier member 300 is not limited thereto.

In addition, as illustrated in the embodiment shown in FIGS. 5 and 6, the barrier member 300 may be configured to be in contact with the pack case 200. That is, the pack case 200 may be configured to be attached to the barrier member 300. In addition, the barrier member 300 may be provided to correspond to the gap between the module case 11 and the pack case 200.

According to the above-implemented configuration of the present disclosure, the module case 11 may be more reliably prevented from warping. In addition, the barrier member 300 may be configured to act as a stopper to prevent the pack case 200 from sagging downward when a thermal event of the battery cell 100 occurs. That is, since the barrier member 300 structurally supports the pack case 200, sagging due to gravity may be suppressed.

Accordingly, according to the above-implemented configuration of the present disclosure, the gap between the barrier member 300 and the pack case 200 may be minimized, thereby more reliably maintaining the gap between the module case 11 and the pack case 200.

In addition, according to the above-implemented configuration of the present disclosure, venting gas or the like may be further suppressed from flowing to another venting path over the barrier member 300.

Referring to FIGS. 5 and 6, the barrier member 300 may be provided on one side of the module case 11 where the venting hole H is formed. That is, the barrier member 300 may be provided on the same side as the venting hole H. For example, the venting hole H may be formed in the top plate 11b, and the barrier member 300 may be provided on the outer side of the top plate 11b.

In this case, the barrier member 300 may be provided between adjacent venting holes H. That is, the barrier member 300 may be alternately arranged with the venting holes H.

As described above, a plurality of venting holes H may be provided at regular intervals in the horizontal direction (X-axis and Y-axis directions). As shown in the embodiments illustrated in FIGS. 5 and 6, the barrier member 300 may be provided between adjacent venting holes H among the venting holes H arranged in a row along the longitudinal direction of the battery cell 100 (the X-axis direction in FIG. 5).

In addition, the cross-sectional area of the barrier member 300 may be smaller than the area between adjacent venting holes H. As a result, the barrier member 300 may not block the venting hole H so as not to obstruct the venting gas discharged through the venting hole H.

Therefore, as indicated by the arrows in FIG. 6, when a thermal event occurs in the battery cell 100, venting gas or the like may move into the space between the barrier members 300. That is, according to the above-implemented configuration of the present disclosure, a venting path for venting gas may be secured between the barrier members 300, thereby effectively preventing or delaying the propagation of thermal runaway between the battery cells 100.

The density of the barrier members 300 may vary depending on the positions where the venting holes H are formed. Here, the density of the barrier members 300 may refer to the number of barrier members 300 per unit area of the top plate 11b or the area occupied by the barrier members 300. The area and number of barrier members 300 may be freely adjusted depending on the area and number of venting holes H.

In particular, the barrier members 300 may be more densely disposed in the portion where the module case 11 is susceptible to warping. For example, the barrier members 300 may be disposed adjacent to the venting holes H.

When venting gas or flames are discharged from the venting holes H, the portion adjacent to the venting holes H is likely to bulge in response to the heat due to the venting gas or flames. Therefore, according to the above-implemented configuration of the present disclosure, by arranging the barrier members 300 adjacent to the venting holes H, the module case 11 having the venting holes H may be more effectively suppressed from bulging.

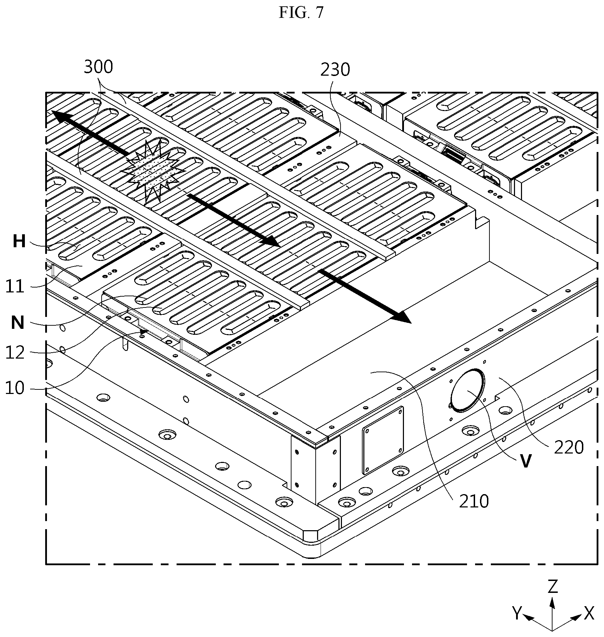

FIG. 7 is a diagram illustrating the movement direction of venting gas when a thermal event occurs in a battery pack according to an embodiment of the present disclosure.

The barrier member 300 may be configured to extend in the stacking direction of the battery cells 100. In particular, the barrier member 300 may be configured to extend in the stacking direction of a plurality of battery modules 10. That is, in the embodiment shown in FIG. 7, the barrier member 300 may be configured to extend in the front-back direction of the battery pack 10.

In particular, the barrier member 300 may be configured to extend from one end of the stack of battery modules 10 to the other end. That is, the barrier member 300 may be configured to overlap at least some of the plurality of battery modules 10.

According to the above-implemented configuration of the present disclosure, even if a thermal event occurs in a battery module 10 and venting gas is emitted, the gas may be prevented from flowing to other battery modules 10 over the barrier member 300.

In addition, a plurality of barrier members 300 may be provided. The plurality of barrier members 300 may be arranged at predetermined intervals in the horizontal direction. In particular, the plurality of barrier members 300 may be arranged to be spaced apart from each other in the longitudinal direction of the battery cell 100.

The plurality of barrier members 300 may be arranged symmetrically with respect to the center of the side frame 220. For example, two barrier members 300 may be provided on each side of the pack case 200.

In this case, a venting path may be formed between adjacent barrier members 300 to allow venting gas or the like to flow. The barrier members 300 may be configured to block the venting gas or the like from moving over the barrier members 300 to other venting paths.

According to the above-implemented configuration of the present disclosure, the venting gas or the like may only flow through a specific venting path, without moving to other adjacent venting paths. That is, the venting gas or the like may be prevented from moving between adjacent venting paths arranged on both sides of the barrier member 300 in the left-right direction (X-axis direction).

In particular, the barrier member 300 may be provided between adjacent venting holes H. As a result, venting gas or the like discharged from the venting hole H may immediately move to the venting path formed between the adjacent barrier members 300.

The venting path may be configured to extend in the front-back direction (the stacking direction of the battery cells 100), similar to the direction in which the barrier member 300 extends. In addition, the barrier member 300 may be configured to guide the fluid flowing through the venting path in at least one direction within the outer space of the module case 11.

More specifically, the venting path may be configured to be open at both longitudinal ends. The venting gas may be discharged toward the longitudinal ends of the venting path. In this case, the barrier member 300 may guide the venting gas to flow toward both ends of the venting path.

When gases generated within the battery module 10 are discharged in multiple directions, the time required to discharge the venting gas may be prolonged, significantly reducing the safety of the battery module 10. However, according to the above-implemented configuration of the present disclosure, since the venting path is formed by the barrier members 300, directional venting of the venting gas may be more effectively induced outside the module case 11. That is, according to the above-implemented configuration of the present disclosure, outside the module case 11, the spread of fluids such as venting gas or flames in all directions may be minimized. Therefore, the barrier member 300 may guide the venting gas flowing through the venting path in one direction, allowing for smooth discharge to the outside of the pack case 200.

Referring to FIGS. 2 and 7, the pack case 200 may include a venting device V. The venting device V may be configured to discharge gas generated from the battery cell 100 accommodated therein to the outside of the pack case 200. The venting device V may be provided in the form of a hole that penetrates between the inside and the outside of the pack case 200.

Alternatively, the venting device V may be configured to be mounted in a hole of the pack case 200 and be operated when venting gas is generated within the pack case 200.

For example, the venting device V may include a venting valve or may be implemented as a venting valve. In this case, a mounting hole may be formed in the side frame 220 so that the venting device V may be mounted in the mounting hole. When the venting device V is equipped with a venting valve or is implemented in the form of a venting valve, the venting valve may be configured to open and discharge the venting gas to the outside of the pack case 200 when the internal pressure of the pack case 200 increases.

The venting device V may be provided on the side of the pack case 200, that is, on the side frame 220. A plurality of venting devices V may be provided. In particular, the venting devices V may be located on at least some of the unit walls of the side frame 220. In addition, the venting device V may be formed respectively on two or more unit walls, or two or more venting devices V may be formed on one unit wall. For example, referring to FIG. 2, a plurality of venting devices V may be provided on each of the front and rear walls. In this case, the plurality of venting devices V may be provided symmetrically with respect to the center of the side frame 220.

According to the above-implemented configuration of the present disclosure, in the event of an abnormal condition in the battery cell 100, high-temperature gases may be discharged in both directions from the pack case 200, thereby facilitating faster discharge of gases to the outside of the pack case 200.

The number and location of the venting devices V described based on the embodiment in FIG. 2 are merely examples, and the number and location may be varied accordingly.

The barrier member 300 may be configured to guide the venting gas to the venting device V. For example, the barrier member 300 may be configured to extend toward the venting device V. Accordingly, the venting gas flowing through the venting path between the barrier members 300 may be directed toward the venting device V.

In this case, as disclosed in the embodiment illustrated in FIG. 7, the plurality of barrier members 300 may be arranged parallel to each other, thereby maintaining a constant spacing between the barrier members 300. At least one venting device V may be provided between the barrier members 300.

According to the above-implemented configuration of the present disclosure, when a thermal event occurs in a battery cell 100, the barrier member 300 may guide venting gas or the like within the venting path toward the venting device V, thereby rapidly discharging the venting gas or the like to the outside of the pack case 200. Therefore, the internal pressure of the pack case 200 may be prevented from increasing, and additional chain reactions of ignitions in other battery cells 100 may be prevented.

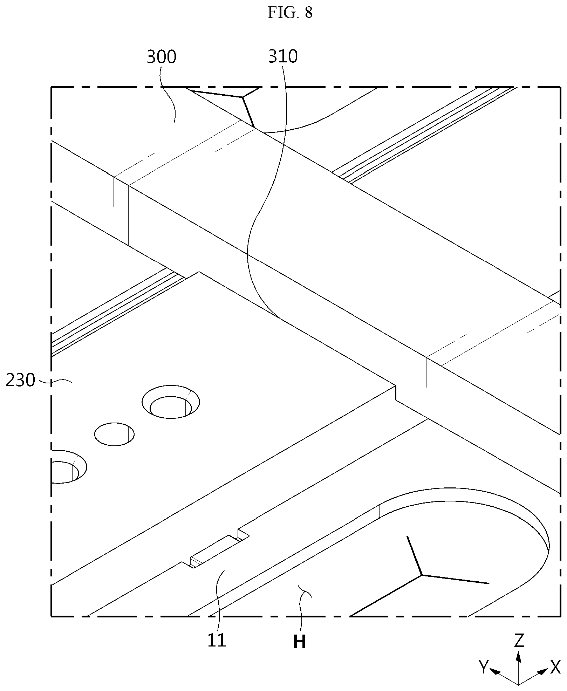

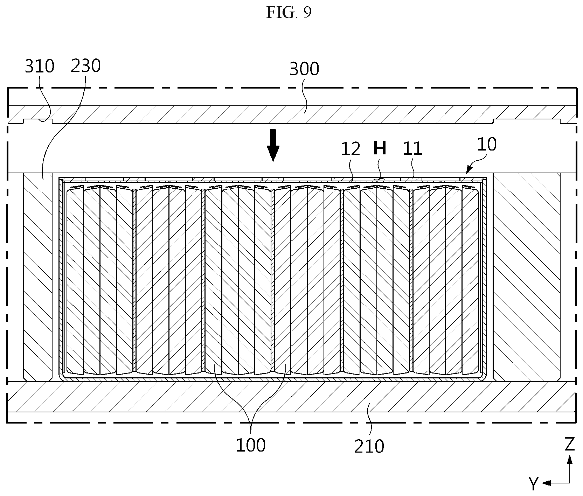

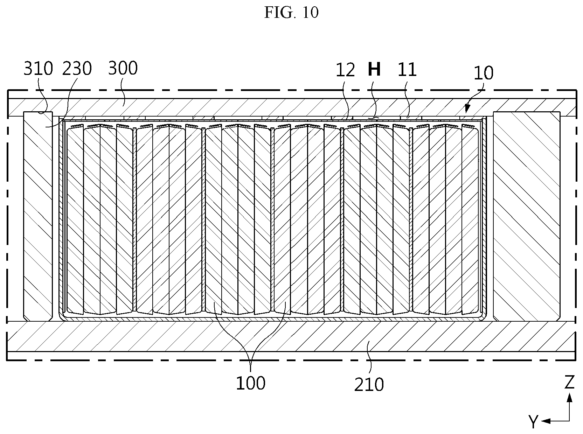

FIG. 8 is a drawing illustrating the coupling structure of a barrier member and a cross-beam in a battery pack according to an embodiment of the present disclosure, and FIG. 9 is a drawing in which a barrier member is separated in a battery pack according to an embodiment of the present disclosure. In addition, FIG. 10 is a cross-sectional view of a battery pack according to an embodiment of the present disclosure, which may be a cross-sectional view taken along line II - II' in FIG. 1.

The barrier member 300 may be configured to be coupled to a cross-beam 230. The barrier member 300 may be configured to be coupled to the upper surface of the cross-beam 230. The barrier member 300 may be configured to be coupled to the upper end of the cross-beam 230.

According to the above-implemented configuration of the present disclosure, since the barrier member 300 is coupled to the cross-beam 230 of the pack case 200, the coupling structure between the barrier member 300 and the pack case 200 may be stably maintained.

In particular, a plurality of cross-beams 230 may be arranged in the stacking direction of the battery cells 100. In this case, the barrier member 300 may be configured to cross at least some of the plurality of cross-beams 230. That is, the barrier member 300 may be configured to extend in the stacking direction of the battery cells 100 and be coupled to at least some of the plurality of cross-beams 230. In this case, the barrier member 300 may be disposed approximately perpendicular to the extension direction of the cross-beams 230.

When a thermal event occurs in the battery cell 100, the top plate 11b of the battery module 10 may be deformed or damaged due to heat. However, according to the above-implemented configuration of the present disclosure, since the barrier member 300 is coupled to the plurality of cross-beams 230, the barrier member 300 may be stably maintained without movement or deformation. In addition, even if the pack lid 240 sags downward due to heat, it may be supported by the barrier member 300 coupled to the plurality of cross-beams 230. Accordingly, the functions of the barrier member 300 to separate the venting paths and maintain the spacing between the venting paths may be reliably secured.

The cross-beam 230 may be configured to protrude further upward than the battery cell 100 or battery module 10. In this case, the barrier member 300 may be configured to be seated on both the cross-beam 230 and the battery module 10. The cross-beam 230 may be provided to be spaced apart from the pack lid 240 by a predetermined distance, and the barrier member 300 may be provided in the space between the cross-beam 230 and the pack lid 240. In addition, the barrier member 300 may be configured to fill the space between the cross-beam 230 and the pack lid 240. That is, the barrier member 300 may be configured to fill not only the space between the battery module 10 and the pack lid 240, but also the space between the cross-beam 230 and the pack lid 240.

As a result, in the event of an abnormal condition in the battery cell 100, the barrier member 300 may maintain a constant gap between the cross-beam 230 and the pack case, even above the cross-beam 230, thereby securing a path for the discharge of high-temperature gases or flames generated in the battery module. Furthermore, venting gas or flames flowing through one venting path may be completely blocked from moving to another venting path.

For example, as disclosed in the embodiment illustrated in the drawing, four cross-beams 230 may be disposed on each side of the pack case 200, and the barrier member 300 may be coupled to each of the four cross-beams 230. According to the above-implemented configuration of the present disclosure, the venting paths may be completely separated and partitioned from each other by the barrier member 300.

As a more specific example, as illustrated in the embodiments in FIGS. 8 to 10, the barrier member 300 and the cross-beam 230 may be configured to be force-fitted into each other. The cross-beam 230 may be configured such that the upper portion is at least partially inserted into the barrier member 300. The barrier member 300 may be configured to be caught by the cross-beam 230 and restrained from moving in the front-back direction.

Specifically, a coupling groove 310 may be formed on the barrier member 300. The coupling groove 310 may be configured such that the end of the cross-beam 230 is inserted thereinto. A plurality of coupling grooves 310 may be provided. The coupling groove 310 may be formed on the barrier member 300 to correspond to the position and number of cross-beams 230. In addition, the width of the coupling groove 310 may be configured to correspond to the thickness of the cross-beam 230.

In addition, the depth of the coupling groove 310 may be configured to correspond to the vertical distance between a top surface of the battery module 10 and a top surface of the cross-beam 230. Accordingly, the barrier member 300 may be configured to be seated on both the battery module 10 and the cross-beam 230.

According to the above-implemented configuration of the present disclosure, the barrier member 300 may be coupled to the pack case 200 with a simple structure. In addition, when assembling the barrier member 300 to the cross-beam 230, the assembly position of the barrier member 300 may be guided. This improves the assembly efficiency of the battery pack 1. In addition, according to the above-implemented configuration of the present disclosure, since no other coupling structure, such as a separate adhesive, is required, productivity may be improved during the manufacturing of the battery pack 1.

In addition, according to the above-implemented configuration of the present disclosure, the upper end of the cross-beam 230 may be provided in close contact with the coupling groove 310 without a gap. That is, a stable sealing force between the barrier member 300 and the pack case 200 may be secured. As a result, according to the above-implemented configuration of the present disclosure, venting gas or flames may be more reliably prevented from moving over the barrier member 300 to the adjacent venting path. Therefore, according to the above-implemented configuration of the present disclosure, the plurality of venting paths may be more reliably separated from each other within the space between the module case 11 and the pack case 200.

In addition, according to the above-implemented configuration of the present disclosure, since the coupling groove 310 is formed on the barrier member 300, the barrier member 300 may be prevented from moving forward and backward. Therefore, since the movement of the barrier member 300 is restricted, the arrangement between the barrier member 300 and the pack case 200 may be stably maintained.

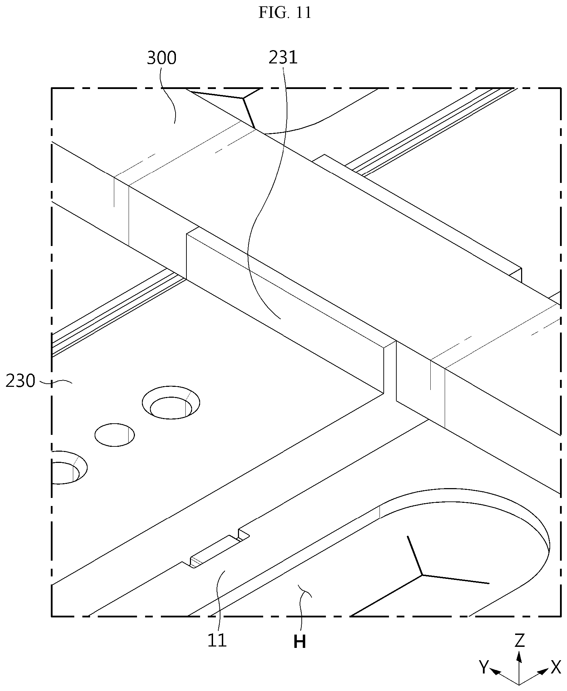

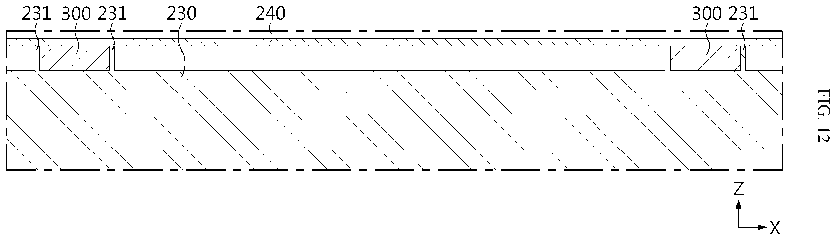

FIG. 11 is a drawing illustrating a coupling structure between a barrier member and a cross-beam in a battery pack according to another embodiment of the present disclosure. In addition, FIG. 12 is a cross-sectional view of a battery pack according to another embodiment of the present disclosure, which may be a cross-sectional view taken along line III - III' in FIG. 1.

As another example, the barrier member 300 may be configured to be restricted from moving in the left-right direction as well as in the front-back direction. More specifically, the cross-beam 230 may include a support 231. The support 231 may be configured to prevent the barrier member 300 from moving in the left-right direction.

The support 231 may be configured to protrude outward from the upper surface of the cross-beam 230. A plurality of supports 231 may be provided. The supports 231 may be provided on both widthwise sides of the barrier member 300. That is, the barrier member 300 may be configured to be interposed between adjacent supports 231. In particular, a plurality of supports 231 may be provided individually for each barrier member 300.

According to the above-implemented configuration of the present disclosure, since the barrier member 300 may be supported on both sides in the left-right direction by the supports 231, the fixing force with respect to the barrier member 300 may be more stably secured. Therefore, the arrangement of the barrier member 300 and the pack case 200 may be more stably maintained.

In addition, according to the above-implemented configuration of the present disclosure, when assembling the barrier member 300 to the cross-beam 230, the assembly position of the barrier member 300 may be more reliably guided, thereby improving the assembly efficiency of the battery pack 1.

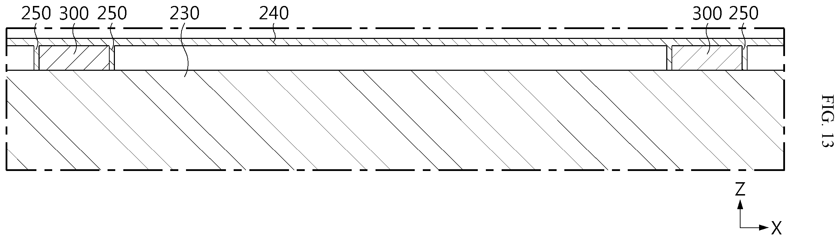

FIG. 13 is a cross-sectional view of a battery pack according to another embodiment of the present disclosure, which may be a cross-sectional view taken along line III **-** III' in FIG. 1.

As another example, the barrier member 300 may be configured to be coupled not only to the cross-beam 230 but also to the pack case 200. For example, as disclosed in the embodiment illustrated in FIG. 13, the pack case 200 may include a protrusion 250. The protrusion 250 may be configured to restrict the movement of the barrier member 300. The protrusion 250 may be configured to protrude inwardly from the inner surface of the pack case 200. The protrusion 250 may be configured to protrude inwardly from the inner surface of the pack lid 240.

The protrusion 250 may be configured such that the end of the barrier member 300 is inserted. A plurality of protrusions 250 may be provided. The protrusions 250 may be provided on both widthwise sides of the barrier member 300. That is, the barrier member 300 may be configured to be interposed between adjacent protrusions 250.

In particular, a plurality of protrusions 250 may be provided individually for each barrier member 300. The protrusion 250 may be provided on the upper portion of the cross-beam 230. Alternatively, the protrusion 250 may be provided on the upper portion of the battery module 10. In addition, the protrusion 250 may be configured to be in contact with the cross-beam 230 or the battery module 10.

According to the above-implemented configuration of the present disclosure, when the pack lid 240 is coupled to the side frame 220, the barrier member 300 may be naturally inserted between adjacent protrusions 250. Therefore, the coupling position of the pack lid 240 may be guided, thereby improving assembly efficiency when assembling the battery module 10.

In addition, according to the above-implemented configuration of the present disclosure, the barrier member 300 may be inserted and fixed between the protrusions 250, thereby further enhancing the fixing strength between the barrier member 300 and the pack lid 240.

In particular, according to the above-implemented configuration of the present disclosure, the left-right movement of the barrier member 300 may be restricted. Accordingly, the possibility of high-temperature and high-pressure venting gas or flames pushing the barrier member 300 in the left-right direction, or of the barrier member 300 being separated from the cross-beam 230 due to the internal pressure of the venting gas, may be reduced. Therefore, the arrangement of the barrier member 300 may be stably maintained.

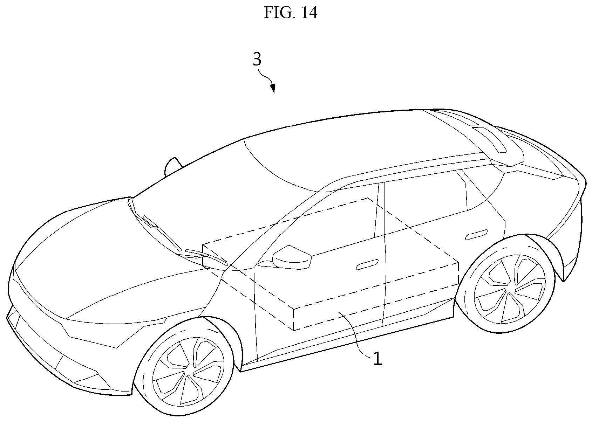

FIG. 14 is a schematic perspective view of a vehicle including a battery pack according to an embodiment of the present disclosure.

Referring to FIG. 14, a vehicle 3 according to an embodiment of the present disclosure may include one or more battery packs 1 according to the aforementioned embodiments. The vehicle 3 according to the present disclosure may be, for example, an electric vehicle, a hybrid vehicle, or a plug-in hybrid vehicle. The vehicle 3 includes a four-wheel vehicle and a two-wheel vehicle. The vehicle 3 may operate by receiving power from the battery pack 1 or battery module 10 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery pack comprising:
a plurality of battery cells;
a pack case configured to accommodate the plurality of battery cells; and
a barrier member coupled to the pack case and configured to extend in at least one direction.

2. The battery pack of claim 1,
further comprising a module case configured to accommodate the plurality of battery cells in a group,
wherein the barrier member is configured to maintain a gap between the pack case and the module case.

3. The battery pack of claim 2,
wherein the module case has a plurality of venting holes formed on one side thereof and configured to discharge venting gas generated from the battery cell to an outside, and
wherein the barrier member is positioned between adjacent venting holes.

4. The battery pack of claim 2,
further comprising a module cover configured to at least partially cover one side of the module case.

5. The battery pack of claim 1,
wherein the barrier member is configured to extend in a stacking direction of the battery cells.

6. The battery pack of claim 1,
wherein a plurality of barrier members are arranged to be spaced apart from each other in a longitudinal direction of the battery cell.

7. The battery pack of claim 1,
wherein the pack case comprises
a venting device configured to discharge venting gas generated from the battery cell to an outside, and
wherein the barrier member is configured to guide the venting gas toward the venting device.

8. The battery pack of claim 1,
wherein the pack case comprises a cross-beam interposed between the plurality of battery cells, and
wherein the barrier member is configured to be coupled to the cross-beam.

9. The battery pack of claim 8,
wherein a plurality of cross-beams are arranged in the stacking direction of the plurality of battery cells, and
wherein the barrier member is configured to cross at least some of the plurality of cross-beams.

10. The battery pack of claim 8,
wherein the barrier member has a coupling groove configured such that an end of the cross-beam is inserted thereinto.

11. The battery pack of claim 8,
wherein the cross-beam comprises a support configured to prevent the barrier member from moving in a left-right direction.

12. The battery pack of claim 1,
wherein the pack case comprises a protrusion protruding inwardly from an inner surface thereof to restrict movement of the barrier member.

13. A vehicle comprising a battery pack of any one of claims 1 to 12.
